# EUROPEAN PATENT APPLICATION

(11) **EP 2 346 254 A1**
(43) Date of publication of application: **20.07.2011**
(21) Application number: 09177222.8
(22) Date of filing: 26.11.2009
(51) Int. Cl.: H04N 7/26, H04N 7/50

(54) **Video decoder and method for motion compensation for out-of-boundary pixels**

(71) Applicant: RESEARCH IN MOTION LIMITED, Waterloo, Ontario N2L 3W8 (CA)
(72) Inventor: JI, Tianying, Waterloo Ontario N2L 5Z5 (CA); WANG, Longji, Waterloo Ontario N2L 5Z5 (CA)
(74) Representative: Patel, Binesh

(57) **Abstract**

Methods and systems for decoding motion compensated video. In the decoding process a virtual predicted block is defined within memory to hold the pixel values of a reference block used in motion compensation with respect to a macroblock being reconstructed. If the reference block includes out-of-boundary pixels from the reference frame, the corresponding pixels within the virtual predicted block are padded using the boundary values of the reference frame. This avoids the need to pad the entire reference frame.

## Description

### FIELD

The present application generally relates to video decoding and, in particular, to methods and devices for performing motion compensation in decoding video.

### BACKGROUND

Advances in video encoding/decoding have enabled the use of video media in a wide variety of contexts and devices. In some cases, mobile/handheld devices are configured to decode and display video media. Where bandwidth permits, encoded video may even be received over a wireless communications channel and decoded and displayed in real-time.

The advances in video encoding/decoding that have made it possible to transmit video media over bandwidth-limited channels involve some very complicated computational operations to encode and decode the media and in order to achieve the degree of compression and quality required. In some situations, such as with mobile handheld devices, the memory and computational resources available to perform decoding are limited.

The current state-of-the-art for video encoding is the ITU-T H.264/AVC video coding standard. It defines a number of different profiles for different applications, including the Baseline profile and others. Even with the Baseline profile targeting mobile devices, the complex operations involved in encoding and decoding are computationally demanding.

One of the techniques used to compress video is motion prediction/compensation. A problem that arises in decoding video is that motion compensation can be based on at least partly out-of-boundary blocks. A conventional approach to decoding includes padding the pixel data for all frames in order to supply the pixel data for out-of-boundary cases. This approach is taxing on memory usage and the padding process consumes a large number of CPU cycles. Another approach is embodied in H.264/AVC standard reference software (called the JM code). This approach involves no pre-motion-compensation padding, but instead relies on pixel-by-pixel position testing to determine for each pixel within a prediction block whether it is within the boundary. This approach is computationally intense.

It would be advantageous to provide for an improved decoder and method of decoding that addresses out-of-boundary motion compensation.

### BRIEF SUMMARY

The present application describes methods and systems for decoding motion compensated video. In the decoding process a virtual predicted block is defined within memory to hold the pixel values of a reference block used in motion compensation with respect to a macroblock being reconstructed. If the reference block includes out-of-boundary pixels from the reference frame, the corresponding pixels within the virtual predicted block are padded using the boundary values of the reference frame. This avoids the need to pad the entire reference frame.

In one aspect, the present application describes a method of decoding a frame of video, the frame having a plurality of macroblocks. The method includes receiving a bitstream; entropy decoding, dequantizing, and inverse transforming the bitstream to obtain residual data for at least one macroblock; determining that the at least one macroblock is inter-coded with respect to a reference block and that the reference block contains out-of boundary pixels from a reference frame; reconstructing the reference block within an array by filling in-boundary pixels with data from the reference frame and by padding the out-of boundary pixels based on adjacent boundary values from the reference frame, wherein the array is stored in memory and is sized based upon the size of the reference block; reconstructing the at least one macroblock using the residual data combined with the reconstructed reference block; and outputting the frame of video.

In another aspect, the present application describes a method of applying motion compensation when decoding a frame of video in a video decoder, the frame having an inter-coded macroblock, wherein the decoder has generated a reference frame and has received a motion vector associated with the inter-coded macroblock and residual data for the inter-coded macroblock. The method includes determining, based on the motion vector and coordinates of the inter-coded macroblock, that the motion vector points to a reference block that includes out-of-boundary pixels, wherein the out-of-boundary pixels are pixels located outside the boundaries of the reference frame; populating pixel values within a virtual predicted block, wherein the populated pixel values correspond to in-boundary pixels of the reference block, and wherein the size of the virtual predicted block is based upon the size of the reference block; filling the out-of-boundary pixel values within the virtual predicted block based on boundary pixels of the reference frame; and calculating the pixel data for the inter-coded macroblock based on the residual data and the virtual predicted block.

In another aspect, the present application describes a decoder for decoding a frame of video. The decoder includes a processor; memory having stored therein an array, wherein the size of the array is based upon the size of a reference block; a communications system for receiving a bitstream of encoded video; and a decoding module stored in memory and containing instructions for configuring the processor to decode the encoded video to recreate the frame of video. The decoding module is configured to entropy decode, dequantize, and inverse transform the bitstream to obtain residual data for a macroblock, determine that the macroblock is inter-coded with respect to the reference block and that the reference block contains out-of-boundary pixels from a reference frame, reconstruct the reference block within the array by filling in-boundary pixels with data from the reference frame and by padding the out-of-boundary pixels based on adjacent boundary values from the reference frame, reconstruct the at least one macroblock using the residual data combined with the reconstructed reference block, and output the frame of video.

In yet another aspect, the present application discloses a decoder for decoding a frame of video. The decoder includes a processor; memory; a communications system for receiving a bitstream of encoded video; and a decoding module stored in memory and containing instructions for configuring the processor to decode the encoded video to recreate the frame of video, including instructions for storing decoded frames in a frame buffer as reference frames, and instructions for applying motion compensation to an inter-coded macroblock, wherein the decoder has received a motion vector associated with the inter-coded macroblock and residual data for the inter-coded macroblock. The decoding module is configured to determine, based on the motion vector and coordinates of the inter-coded macroblock, that the motion vector points to a reference block that includes out-of boundary pixels, wherein the out-of-boundary pixels are pixels located outside the boundaries of the reference frame, populate pixel values within a virtual predicted block, wherein the populated pixel values correspond to in-boundary pixels of the reference block, and wherein the size of the virtual predicted block is based on the size of the reference block, fill the remaining pixel values within the virtual predicted block based on boundary pixels of the reference frame, and calculate the pixel data for the inter-coded macroblock based on the residual data and the virtual predicted block.

In another aspect, the present application discloses a mobile electronic device, including a display screen and the decoder described herein, and wherein the communication system includes a wireless communication system.

In some embodiments, the encoder and decoder are compliant with the ITU-T H.264/AVC standard for video compression.

### BRIEF DESCRIPTION OF THE DRAWINGS

Reference will now be made, by way of example, to the accompanying drawings which show example embodiments of the present application, and in which:

Figure 1 shows a block diagram of an encoder in accordance with the present application;

Figure 2 shows a block diagram of a decoder in accordance with the present application;

Figure 3 graphically illustrates an example video frame and a current macroblock;

Figure 4 shows a reference frame and a search window;

Figure 5 shows the reference frame and a reference block;

Figure 6 shows an example reference frame and search window;

Figure 7 shows a partial view of the pixels of a padded reference frame;

Figure 8 shows the padded reference frame, with padded regions R1, R2, ..., R8;

Figure 9 shows, in flowchart form, an overview of an example method of decoding an encoded video; and

Figure 10 shows, in flowchart form, an example method for performing motion compensation within a video decoder.

Similar reference numerals may have been used in different figures to denote similar components.

### DESCRIPTION OF EXAMPLE EMBODIMENTS

The present application describes methods and systems for decoding motion compensated video. In the decoding process a virtual predicted block is defined within memory to hold the pixel values of a reference block used in motion compensation with respect to a macroblock being reconstructed. If the reference block includes out-of-boundary pixels from the reference frame, the corresponding pixels within the virtual predicted block are padded using the boundary values of the reference frame. This avoids the need to pad the entire reference frame.

In one aspect, the present application describes a method of decoding a frame of video, the frame having a plurality of macroblocks. The method includes receiving a bitstream; entropy decoding, dequantizing, and inverse transforming the bitstream to obtain residual data for at least one macroblock; determining that the at least one macroblock is inter-coded with respect to a reference block and that the reference block contains out-of boundary pixels from a reference frame; reconstructing the reference block within an array by filling in-boundary pixels with data from the reference frame and by padding the out-of boundary pixels based on adjacent boundary values from the reference frame, wherein the array is stored in memory and is sized based upon the size of the reference block; reconstructing the at least one macroblock using the residual data combined with the reconstructed reference block; and outputting the frame of video.

In another aspect, the present application describes a method of applying motion compensation when decoding a frame of video in a video decoder, the frame having an inter-coded macroblock, wherein the decoder has generated a reference frame and has received a motion vector associated with the inter-coded macroblock and residual data for the inter-coded macroblock. The method includes determining, based on the motion vector and coordinates of the inter-coded macroblock, that the motion vector points to a reference block that includes out-of-boundary pixels, wherein the out-of-boundary pixels are pixels located outside the boundaries of the reference frame; populating pixel values within a virtual predicted block, wherein the populated pixel values correspond to in-boundary pixels of the reference block, and wherein the size of the virtual predicted block is based upon the size of the reference block; filling the out-of-boundary pixel values within the virtual predicted block based on boundary pixels of the reference frame; and calculating the pixel data for the inter-coded macroblock based on the residual data and the virtual predicted block.

In another aspect, the present application describes a decoder for decoding a frame of video. The decoder includes a processor; memory having stored therein an array, wherein the size of the array is based upon the size of a reference block; a communications system for receiving a bitstream of encoded video; and a decoding module stored in memory and containing instructions for configuring the processor to decode the encoded video to recreate the frame of video. The decoding module is configured to entropy decode, dequantize, and inverse transform the bitstream to obtain residual data for a macroblock, determine that the macroblock is inter-coded with respect to the reference block and that the reference block contains out-of-boundary pixels from a reference frame, reconstruct the reference block within the array by filling in-boundary pixels with data from the reference frame and by padding the out-of-boundary pixels based on adjacent boundary values from the reference frame, reconstruct the at least one macroblock using the residual data combined with the reconstructed reference block, and output the frame of video.

In yet another aspect, the present application discloses a decoder for decoding a frame of video. The decoder includes a processor; memory; a communications system for receiving a bitstream of encoded video; and a decoding module stored in memory and containing instructions for configuring the processor to decode the encoded video to recreate the frame of video, including instructions for storing decoded frames in a frame buffer as reference frames, and instructions for applying motion compensation to an inter-coded macroblock, wherein the decoder has received a motion vector associated with the inter-coded macroblock and residual data for the inter-coded macroblock. The decoding module is configured to determine, based on the motion vector and coordinates of the inter-coded macroblock, that the motion vector points to a reference block that includes out-of-boundary pixels, wherein the out-of-boundary pixels are pixels located outside the boundaries of the reference frame, populate pixel values within a virtual predicted block, wherein the populated pixel values correspond to in-boundary pixels of the reference block, and wherein the size of the virtual predicted block is based on the size of the reference block, fill the remaining pixel values within the virtual predicted block based on boundary pixels of the reference frame, and calculate the pixel data for the inter-coded macroblock based on the residual data and the virtual predicted block.

In another aspect, the present application discloses a mobile electronic device, including a display screen and the decoder described herein, and wherein the communication system includes a wireless communication system.

In some embodiments, the encoder and decoder are compliant with the ITU-T H.264/AVC standard for video compression.

In the description that follows, the terms frame and slice are used somewhat interchangeably. Those of skill in the art will appreciate that, in the case of the H.264 standard, a frame may contain one or more slices. It will also be appreciated that certain encoding/decoding operations are performed on a frame-by-frame basis and some are performed on a slice-by-slice basis, depending on the particular requirements of the applicable video coding standard. In any particular embodiment, the applicable video coding standard may determine whether the operations described below are performed in connection with frames and/or slices, as the case may be. Accordingly, those ordinarily skilled in the art will understand, in light of the present disclosure, whether particular operations or processes described herein and particular references to frames, slices, or both are applicable to frames, slices, or both for a given embodiment.

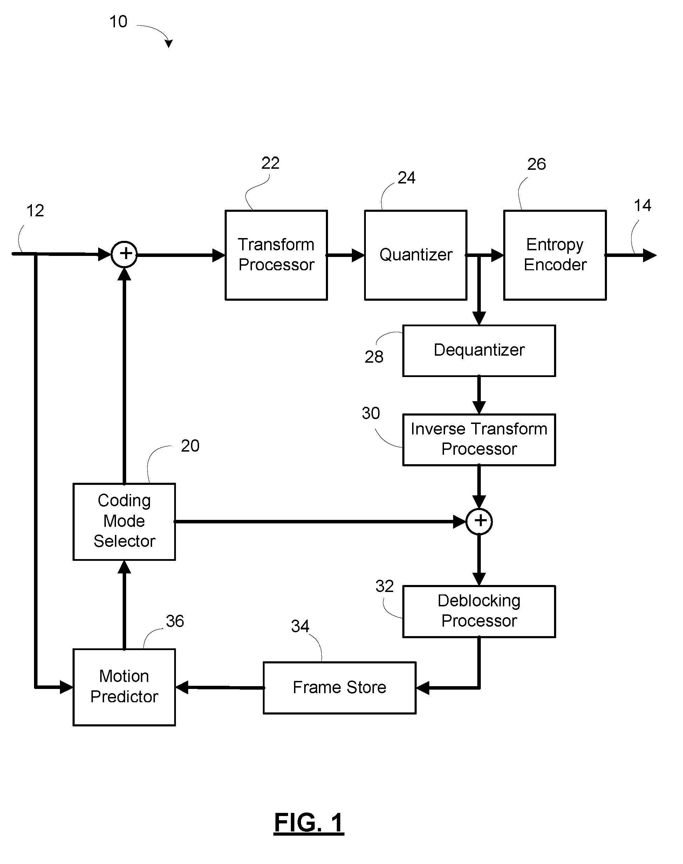

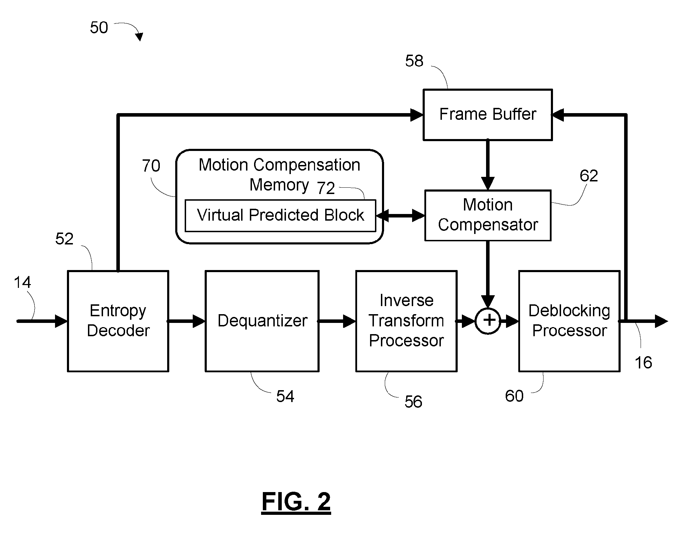

Reference is now made to Figure 1, which shows, in block diagram form, an encoder 10 for encoding video. Reference is also made to Figure 2, which shows a block diagram of a decoder 50 for decoding video.

The encoder 10 receives a video source 12 and produces an encoded bitstream 14. The decoder 50 receives the encoded bitstream 14 and outputs a decoded video frame 16. The encoder 10 and decoder 50 may be configured to operate in conformance with a number of video compression standards. For example, the encoder 10 and decoder 50 may be H.264/AVC compliant. In other embodiments, the encoder 10 and decoder 50 may conform to other video compression standards, including evolutions of the H.264/AVC standard.

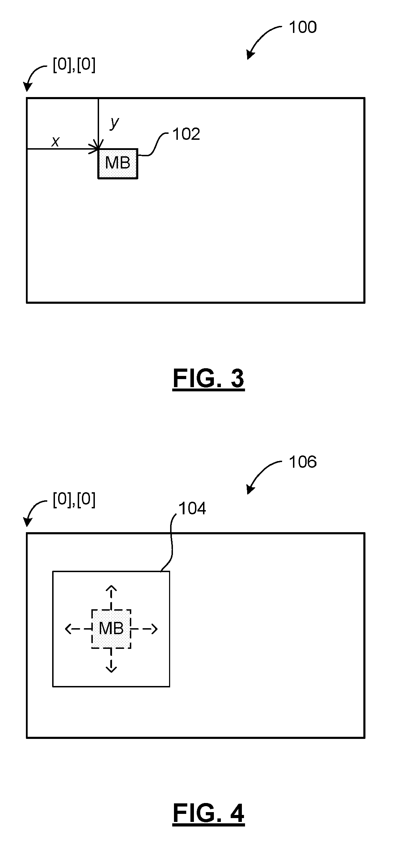

The encoder 10 includes a coding mode selector 20, transform processor 22, quantizer 24, and entropy encoder 26. As will be appreciated by those ordinarily skilled in the art, the coding mode selector 20 determines the appropriate coding mode for the video source, for example whether the subject frame/slice is of I, P, or B type, and whether particular macroblocks within the frame/slice are inter or intra coded. The transform processor 22 performs a transform upon the spatial domain source data. For example, in many embodiments a discrete cosine transform (DCT) is used. The transform is performed on a block basis. The block size may be specified in the standard. In the H.264 standard, for example, a typical 16x16 macroblock contains sixteen 4x4 transform blocks and the DCT process is performed on the 4x4 blocks, as illustrated graphically in Figure 3. In some cases, the transform blocks may be 8x8, meaning there are four transform blocks per macroblock. In yet other cases, the transform blocks may be other sizes.

The resulting coefficient matrix for each block is quantized by the quantizer 24. The quantized coefficients and associated information are then encoded by the entropy encoder 26.

The H.264 standard also prescribes the use of motion prediction/compensation to take advantage of temporal prediction. Accordingly, the encoder 10 has a feedback loop that includes a de-quantizer 28, inverse transform processor 30, and deblocking processor 32. These elements mirror the decoding process implemented by the decoder 50 to reproduce the frame/slice. A frame store 34 is used to store the reproduced frames. In this manner, the motion prediction is based on what will be the reconstructed frames at the decoder 50 and not on the original frames, which may differ from the reconstructed frames due to the lossy compression involved in encoding/decoding. A motion predictor 36 uses the frames/slices stored in the frame store 34 as source frames/slices for comparison to a current frame for the purpose of identifying similar blocks. Accordingly, for macroblocks to which motion prediction is applied, the "source data" which the transform processor 22 encodes may be the residual data that comes out of the motion prediction process. For example, it may include information regarding the reference frame, a spatial displacement or "motion vector", and residual pixel data that represents the differences (if any) between the reference block and the current block. Information regarding the reference frame and/or motion vector may not be processed by the transform processor 22 and/or quantizer 24, but instead may be supplied to the entropy encoder 26 for encoding as part of the bitstream along with the quantized coefficients.

Those ordinarily skilled in the art will appreciate the details and possible variations for implementing H.264 encoders.

The decoder 50 includes an entropy decoder 52, dequantizer 54, inverse transform processor 56 and deblocking processor 60. A frame buffer 58 supplies reconstructed frames for use by a motion compensator 62 in applying motion compensation. The bitstream 14 is received and decoded by the entropy decoder 52 to recover the quantized coefficients. Side information may also be recovered during the entropy decoding process, some of which may be supplied to the motion compensation loop for using in motion compensation, if applicable. For example, the entropy decoder 52 may recover motion vectors and/or reference frame information for inter-coded macroblocks.

The quantized coefficients are then dequantized by the dequantizer 54 to produce the transform domain coefficients, which are then subjected to an inverse transform by the inverse transform processor 56 to recreate the "video data". It will be appreciated that, in some cases, such as with an intra-coded macroblock, the recreated "video data" is the pixel data for that macroblock. In other cases, such as inter-coded macroblocks, the recreated "video data" from the inverse transform processor 56 is the residual data for use in motion compensation relative to a reference block.

The motion compensator 62 locates a reference block within the frame buffer 58 specified for a particular inter-coded macroblock. It does so based on the reference frame information and motion vector specified for the inter-coded macroblock. It then supplies the reference block pixel data for combination with the residual data to arrive at the recreated video data for that macroblock.

A deblocking process may then be applied to a reconstructed frame/slice, as indicated by the deblocking processor 60. After deblocking, the frame/slice is output as the decoded video frame 16, for example for display on a display device. It will be understood that the video playback machine, such as a computer, set-top box, DVD or Blu-Ray player, and/or mobile handheld device, may buffer decoded frames in a memory prior to display on an output device.

Referring again to Figure 1, it will be appreciated that the motion prediction process involves searching for similar blocks of pixels in nearby frames. In order to reduce some of the complexity of searching for similar blocks, the motion predictor 36 typically limits its search to a subset of frames. For example, in some example encoders, the potential reference frames may be limited to a certain number of adjacent frames. In some cases, only frames previous to the current frame in the temporal video sequence may be used as reference frames; in other cases, frames both previous to and after the current frame may serve as reference frames. Example encoders may also restrict the search within a potential reference frame to a portion of the frame, such as a search window around the current macroblock location.

Reference is made to Figure 3, which shows an example video frame 100 and a current macroblock 102. The current macroblock 102 being encoded by the encoder 10 is located at a position (x, y) relative to the upper left corner of the frame, which may be designated (0,0).

Referring now to Figure 4, a reference frame 106 and a search window 104 are illustrated graphically. The position (x, y) of the current macroblock 102 is illustrated with dashed lines. The search window may be a specified number of pixels in particular directions. For example, with a search window of 16 pixels in any direction, the encoder 10 may search an area within (-16 to +16, -16 to +16) of the current macroblock 102 location. The precise search window 104 is specified for different profiles/levels by the standard for different applications. For example, a video type in which greater motion is expected, such as a sporting event, may employ a profile/level with a wider search window than one in which less motion is expect, such as a newscast.

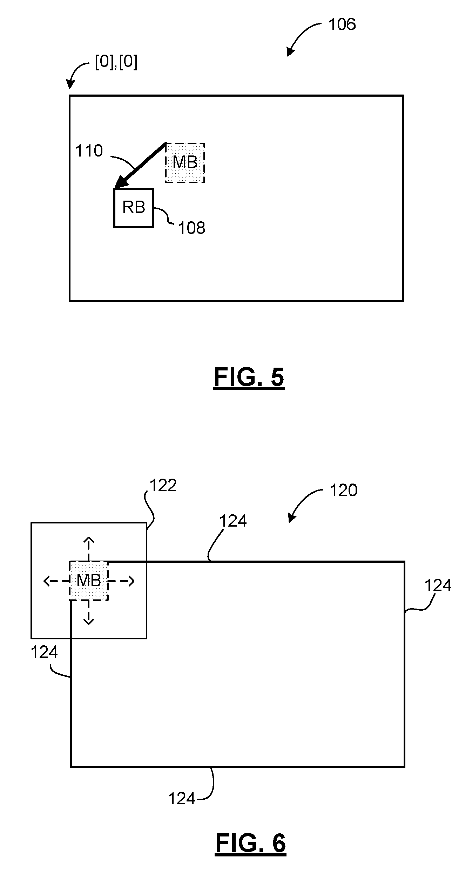

Reference is now made to Figure 5, which graphically illustrates the reference frame 106 and a reference block 108. The reference block 108 is the closest match to the current macroblock 102 that the encoder 10 has been able to identify within the candidate reference frames. A motion vector 110 defines the spatial displacement between the reference block 108 within the reference frame and the position of the current macroblock 102. Those ordinarily skilled in the art will appreciate that some video encoding standards permit the use of multiple reference blocks and weighted sums/averages. It will also be understood that motion prediction may include ½ pixel or ¼ pixel resolution motion vectors. For simplicity, these details are not further explained in this example, but those ordinarily skilled in the art will appreciate that the present application includes embodiments having these and other more complex features of motion prediction.

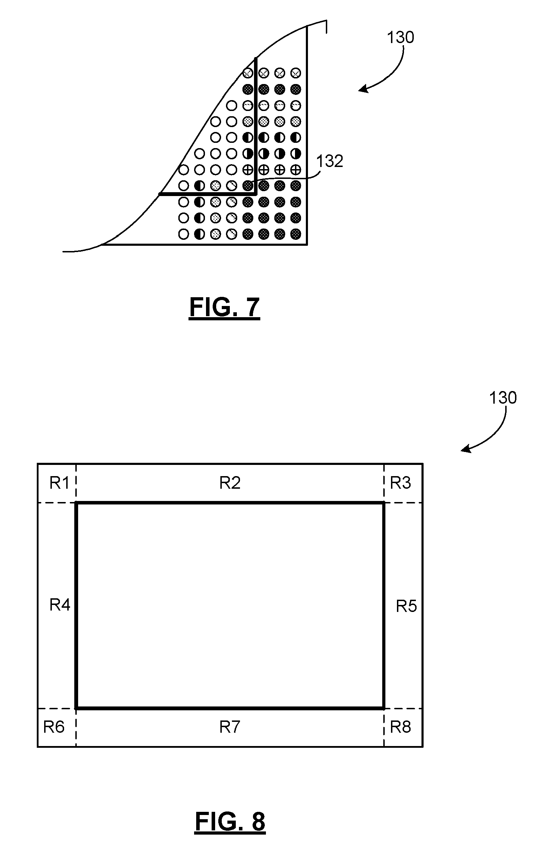

Reference is now made to Figure 6, which shows an example reference frame 120 and search window 122. It will be noted that the search window 122 extends beyond the boundaries 124 of the frame 120. Some video encoding standards, including H.264/AVC, allow for the possibility of out-of-boundary pixels in reference blocks. An encoder typically supplies data for out-of-boundary pixels by "extending" the boundary pixels outwards to fill a padded region surrounding the frame. Referring now to Figure 7, which shows a partial view of the pixels of a padded reference frame 130, it will be noted that, at least in one embodiment, at the corners the corner pixel supplies the value for padded pixels within the whole padded corner region. The pixels along the boundaries of the sides supply the values for padded pixels extending outwards normal to the boundaries. The padded region in Figure 7 is only 3 pixels deep for ease of illustration. In many embodiments the padded region is much larger, for example 16 or 21 pixels deep. This results in eight regions of padding, as illustrated in Figure 8. Figure 8 shows the padded reference frame 130, with padded regions R1, R2, ..., R8.

It will be appreciated that the search process and the padding of each frame at the encoder 10 to permit for out-of-boundary searching, may result in some partly, or even wholly, out-of-boundary reference blocks. At the decoder, out-of-boundary pixel data will be required when out-of-boundary reference blocks are encountered. In some cases, the decoder may be configured to engage in the same padding process that the encoder typically uses. In such a case, the decoder 50 may automatically pad every frame with out-of-boundary data before placing it in the frame buffer 58. However, this may be taxing on memory-limited devices, such as mobile handheld devices. For a typical 320 x 240 picture, assuming padding 21 pixels deep, more than 24 kBytes of additional memory is required for each frame. Moreover, the additional size and data for the frame can result in a higher risk of a cache miss when working with padded reference frames. This can adversely affect the decoder speed as additional reads of primary memory are required.

The present application discloses a method and decoder that avoids the memory expense associated with padding all frames and, thus, is likely to improve the speed of the decoding.

Referring again to Figure 2, for the purposes of illustration the decoder 50 is shown having a motion compensation memory 70. It will be appreciated that the nature of the motion compensation memory 70 may differ in various embodiments. When implemented using a general purpose platform, such as a general purpose computer or a mobile handheld device, the motion compensation memory 70 may be the primary memory, such as RAM, or may be fast data buffers, such as a cache memory closely associated with the central processing unit. Those ordinarily skilled in the art will appreciate that many processors (CPUs) may be configured to use fast data buffers, such as a cache memory, whenever possible. If data needed for a particular operation is not available in the cache, the CPU may need to retrieve the data from the primary memory (often termed a "cache miss"). In some cases, this may include removing some portion of the data in the cache memory and writing it to the primary memory (swapping data between the primary memory and the cache). Accordingly, the motion compensation memory 70 may include both the primary memory and the cache memory or other memory available to the processor, depending upon where the motion compensation data happens to be stored at any particular time. In a dedicated or embedded system, the decoder 50 may be configured to maintain certain motion compensation data in a particular data buffer, such as a cache memory.

The motion compensation memory 70 stores, among other data, a virtual predicted block 72. The virtual predicted block 72 is an array reserved for reconstructing a reference block that includes out-of-boundary pixels. Accordingly, the virtual predicted block 72 is formed to hold the pixel data for the size of reference block used in the decoder 50. In one example embodiment in which the macroblocks are 16x16, the virtual predicted block is 21x21 pixels. The extra five pixels are required by the Finite Impulse Response (FIR) filter to do ¼ pel resolution interpolation as defined under the H.264/AVC standard. It will be appreciated that the virtual predicted block 72 may be other sizes, depending on the application. Since the virtual predicted block is fairly small, the decoder 50 may be configured to store the virtual predicted block in fast data cache memory for memory-configurable applications, e.g., embedded system applications. For general purpose applications, where memory management is done by the operating system, the small size of the virtual predicted block means that the likelihood of a cache miss is much lower than with the conventional frame padding approach. The small size of the virtual predicted block makes it more likely that the virtual predicted block will remain in fast cache memory instead of being moved to primary memory, and thus it is more likely to be easily accessible to the processor.

The motion compensator 62 is configured to determine whether the reference block contains out-of-boundary pixels and, if so, to build the virtual predicted block 72 by filling the in-boundary pixels from corresponding pixels of the reference frame and padding the out-of-boundary pixels with boundary pixels from the reference frame.

With the coordinates or location of the current macroblock known, i.e. [row], [col], and the motion vector known, the motion compensator 62 is configured to determine the location of the reference block. Moreover, by knowing the size of the reference block, the motion compensator 62 is able to determine the pixel addresses covered by the block and, thus, can test those addresses against the boundaries of the reference frame to determine whether any portion of the block is outside the boundaries. For example, if the address format is [row], [col] and the upper left corner of the frame is defined as pixel address [0],[0], then the lower left corner is [height-1], [0], the upper right corner is [0], [width-1], and the lower right corner is [height-1], [width-1], wherein [height] is the height of the frame in pixels and [width] is the width of the frame in pixels.

As an example, the motion vector [mv_*y*], [mv_*x*] and motion block coordinates [*y*], [*x*], result in a coordinate location for the upper left corner of the reference block [rf_*y*], [rf_*x*]. In one embodiment, [rf_*y*] is equal to [*y*] + [mv_*y*] and [rf_*x*] is equal to [*x*] + [mv_x]. In some other embodiments, ½ pel or ¼ pel resolution motion vectors may result in slightly different calculations.

The height and width of the reference block may be used to determine the coordinates for the other corners of the reference block, including the bottom right corner [rf_*y* + rf_height], [rf_*x* + rf_width]. The motion compensator 62 may then determine where there are any out-of-boundary pixels by evaluating the coordinates of the reference block against the boundaries of the reference frame. For example, in one embodiment, the motion compensator 62 may evaluate the expressions:
If [rf_y] < 0, then out of top boundary
If [rf_*y* + rf_height] > [height-1], then out of bottom boundary
If [rf_*x*] < 0, then out of left boundary
If [rf_*x* + rf_width] > [width-1], then out of right boundary

The motion compensator 62 may further determine whether the reference block includes pixels within the out-of-boundary corner regions, *i.e.* R1, R3, R6, and R8. In one embodiment, it may determine this through assessing whether the block is located outside of two boundaries. For example, if through the testing above it determines that the block exceeds the left and bottom boundaries, then it knows that the block falls within at least R6, and possibly also R4 and/or R7.

If the reference block contains any out-of-boundary pixels, then the motion compensator 62 fills the in-boundary pixels of the virtual predicted block 72 based on the pixels of the reference frame, and then "extends" the boundary pixels to fill in the out-of-boundary pixels of the virtual predicted block 72. Those skilled in the art will appreciate that in some embodiments, it may pad the out-of-boundary pixels and then fill the in-boundary pixels.

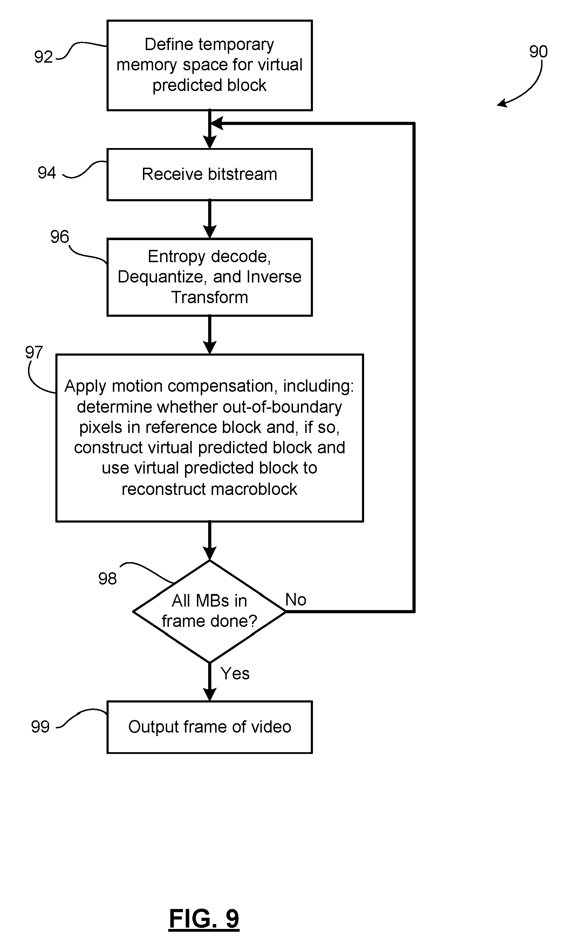

Reference is made to Figure 9, which shows, in flowchart form, an overview of an example method 90 of decoding an encoded video. The method 90, implemented in a decoder, includes a step 92 of defining memory space for a virtual predicted block. The virtual predicted block is an array for storing the pixels values of a reference block. The array may be repeatedly overwritten and re-used for successive reference blocks during the motion compensation process. In other words, it serves as a temporary space in which to rebuild or reconstruct the reference block, at least for cases in which out-of-boundary pixels are involved, which avoids the necessity of padding or modifying the reference frame/picture.

In step 94, an encoded video bitstream is received by the decoder and, in step 96, the decoder performs entropy-decoding, dequantizing, and inverse transforming of the bitstream to recover and reconstruct the video frames. As part of the reconstruction of the video frames, the decoder performs motion compensation on inter-coded macroblocks. The motion compensation, as indicated in step 97, includes determining whether the reference block includes out-of-boundary pixels and, if so, building the virtual predicted block and using the virtual predicted block to reconstruct the macroblock. Step 98 shows a loop back to step 94 to illustrate that the virtual predicted block array is re-used for successive macroblocks in the decoding process. It will be appreciated that the virtual predicted block array may be overwritten and re-used for marcoblocks of successive frames as well.

In step 99, the reconstructed video frame is output.

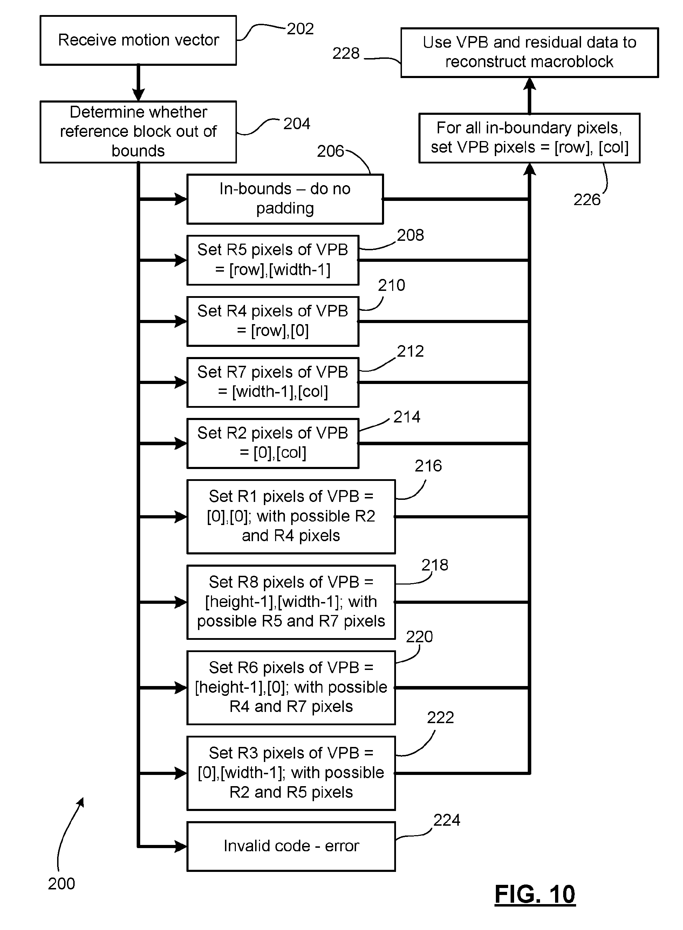

Reference is now made to Figure 10, which shows, in flowchart form, an example method 200 for performing motion compensation within a video decoder. The method 200 includes a step 202 of receiving the motion vector. The motion vector for a given macroblock is received in the encoded bitstream input to the decoder, as is the residual data and an identifier for the reference frame. It will be understood that the motion compensator 62 obtains the reference frame from the frame buffer 58.

In step 204, the motion compensator 62 determines the location of the reference block based on the motion vector and the location of the macroblock that is being reconstructed. This may include determining the coordinates of the corners of the reference block and comparing those coordinates against the boundary thresholds [0], [0], [width-1], and [height-1]. In one embodiment, a reference block position code is calculated by this formula: (rf_y < 0) << 3 | (rf_y + rf_height > height - 1) << 2 |(rf_x < 0) << 1 | (rf_x + rf_width> width - 1), where "<<" stands for logical left shift and "|" stands for logical OR. The following table shows the position code of the reference block and the corresponding regions:

| Reference block position code | Reference block position code in binary | Out-of boundary regions |
|---|---|---|
| 0 | 0b0000 | None (In-boundary prediction_ |
| 1 | 0b0001 | R5 |
| 2 | 0b0010 | R4 |
| 4 | 0b0100 | R7 |
| 8 | 0b1000 | R2 |
| 10 | 0b1010 | R1 [R2, R4 possibly] |
| 5 | 0b0101 | R8 [R5, R7 possibly] |
| 6 | 0b0110 | R6 [R4, R7 possibly] |
| 9 | 0b1001 | R3 [R2, R5 possibly] |
| others | others | Invalid codes |

The method 200 then goes on to build the virtual predicted block 72 by copying relevant portions of the reference frame pixel data into the virtual predicted block 72 and padding any out-of-boundary pixels within the virtual predicted block 72.

In step 206, the position code indicates that the reference block is entirely in-boundary, meaning no out-of-boundary pixels/padding are required. Accordingly in step 206 no padding takes place. The method 200 skips from step 206 to step 226 to fill the entire virtual predicted block 72 with the in-boundary pixels of the reference block. It will be appreciated that in some embodiments the virtual predicted block array need not be used for the in-boundary case.

Step 224 denotes the case when invalid codes are obtained. Step 224 is illustrated for the sake of the completeness of the position codes, perhaps for conceptual reasons. In practical embodiments it may be included to indicate errors in the position code determination.

For other cases, in which out-of-boundary pixels are involved, the motion compensator 62 fills corresponding pixels of the virtual predicted block 72 with the value of the in-boundary pixels (if there are any) and the value of the out-of-boundary pixels. For example, in step 208, the motion compensator 62 fills corresponding pixels of the virtual predicted block 72 with the value of the in-boundary pixels, if any (step 226), and pads the out-of-boundary pixels with the right boundary value of pixels at [row], [width-1]. Similarly, in step 210, the motion compensator 62 fills corresponding pixels of the virtual predicted block 72 with the value of the in-boundary pixels, if any (step 226), and pads the out-of boundary pixels with the left boundary value of pixel at [row], [0].

In step 216, the motion compensator 62 fills corresponding pixels of the virtual predicted block 72 with the value of in-boundary pixels, if any (step 226) and pads the R1 out-of-boundary pixels with the [0],[0] pixel value. In step 216 the motion compensator also determines whether the reference block includes pixels in region R2 above the top boundary of the reference frame and pixels in region R4 on the left. If so, then in step 216 the motion compensator 62 pads the corresponding portion of the virtual predicted block 72 based on the values of the pixels along the portion of the top boundary and left boundary that fall within the reference frame. That is, within the virtual predicted block 72, the columns of pixels corresponding to above-top-boundary pixels of the reference frame are set to the value of the boundary pixel for that column at [0], [col], and the rows of pixels corresponding to outside-left-boundary pixels of the reference frame are set to the value of the boundary pixel for that row at [row], [0].

Similar steps are performed for regions R7 (step 212), R2 (step 214), R8 (step 218), R6 (step 220), and R3 (step 222).

The motion compensator 62 also copies into the virtual predicted block 72 any portion of the reference frame that includes in-boundary pixels, as indicated in step 226.

In this manner, the motion compensator 62 builds the virtual predicted block 72 from the in-boundary pixel values of the reference frame and through padding the virtual predicted block pixels 72 for any the out-of-boundary pixels of the reference frame.

It will be understood by those ordinarily skilled in the art that other algorithms may be used to build the virtual predicted block 72. For example, the in-boundary pixels may be copied and then the out-of-boundary pixels may be padded. The order in which the regions are evaluated may be different in some embodiments. Other modifications will be appreciated by those ordinarily skilled in the art.

After building the virtual predicted block 72, the motion compensator 62 uses the virtual predicted block 72 in the motion compensation process. Specifically, the motion compensator 62 reconstructs the current macroblock through applying the residual data to the virtual predicted block 72, as indicated in step 228.

The virtual predicted block array can be reused for each instance of motion compensation. In one embodiment, it may be used for all motion compensation operations, whether out-of-boundary pixels are present or not. In another embodiment, the motion compensator 62 determines whether any out-of-boundary pixels are part of the reference block and only builds the virtual predicted block if out-of-boundary pixels are involved. Otherwise, it directly uses the data from the reference frame together with the residual data to reconstruct the macroblock.

It will be appreciated that the decoder and/or encoder according to the present application may be implemented in a number of computing devices, including, without limitation, servers, suitably programmed general purpose computers, set-top television boxes, television broadcast equipment, and mobile devices. In particular, implementation of the decoder within mobile electronic devices may prove advantageous given the limited processing and memory resources available in a mobile electronic device, and the increasing use of such devices to receive and view video media.

Certain adaptations and modifications of the described embodiments can be made. Therefore, the above discussed embodiments are considered to be illustrative and not restrictive.

## Claims

1. A method of decoding a frame of video, the frame having a plurality of macroblocks, comprising:
receiving a bitstream (14);
entropy decoding (52), dequantizing (54), and inverse transforming (56) the bitstream to obtain residual data for at least one macroblock (102);
determining that the at least one macroblock (102) is inter-coded with respect to a reference block (108) and that the reference block (108) contains out-of-boundary pixels from a reference frame (106);
reconstructing the reference block within an array (72) by filling in-boundary pixels with data from the reference frame (106) and by padding the out-of boundary pixels based on adjacent boundary values from the reference frame (106), wherein the array (72) is stored in memory (70) and is sized based upon the size of the reference block (108);
reconstructing (62) the at least one macroblock (102) using the residual data combined with the reconstructed reference block; and
outputting the frame of video (16).

2. A method of applying motion compensation (62) when decoding a frame of video in a video decoder (50), the frame having an inter-coded macroblock (102), wherein the decoder (50) has generated a reference frame (106) and has received a motion vector associated with the inter-coded macroblock (102) and residual data for the inter-coded macroblock (102), the method comprising:
determining, based on the motion vector and coordinates of the inter-coded macroblock (102), that the motion vector points to a reference block (108) that includes out-of-boundary pixels, wherein the out-of boundary pixels are pixels located outside the boundaries of the reference frame (106);
populating pixel values within a virtual predicted block (72), wherein the populated pixel values correspond to in-boundary pixels of the reference block (108), and wherein the size of the virtual predicted block (72) is based upon the size of the reference block (108);
filling the out-of-boundary pixel values within the virtual predicted block (72) based on boundary pixels of the reference frame (106); and
calculating the pixel data for the inter-coded macroblock (102) based on the residual data and the virtual predicted block (72).

3. The method claimed in claim 2, wherein filling the out-of-boundary pixel values comprises populating each out-of-boundary pixel using the value of the in-boundary pixel nearest to that out-of-boundary pixel.

4. The method claimed in claim 2, further including defining the virtual predicted block (72) in memory (70) by allocating an array for storing the pixel values of the virtual predicted block (72).

5. The method claimed in claim 2, wherein the array is reused for constructing the virtual predicted block (72) for successive macroblocks in the decoding process.

6. The method claimed in claim 2, wherein the array comprises 21x21 pixels.

7. The method claimed in claim 2, wherein the bitstream of encoded video is encoded in compliance with the ITU-T H.264/AVC video encoding protocol.

8. A decoder (50) for decoding a frame of video, comprising:
a processor;
memory (70);
a communications system for receiving encoded video; and
a decoding module stored in memory and containing instructions for configuring the processor to perform the method claimed in any one of claims 1 to 7.

9. A mobile electronic device, comprising a display screen and the decoder of claim 8, wherein the communication system includes a wireless communication system.
